# EUROPÄISCHE PATENTSCHRIFT

(11) **EP 0 683 028 B1**
(45) Veröffentlichungstag und Bekanntmachung des Hinweises auf die Patenterteilung: **22.09.1999**
(21) Anmeldenummer: 95107103.4
(22) Anmeldetag: 11.05.1995
(51) Int. Cl.: B29C 47/76, B29B 15/02

(54) **Verfahren zum Entwässern einer wasserhaltigen Kunststoffschmelze in einem Doppelschneckenextruder**
Method of dehydrating a water containing resin melt in a twin screw extruder
Procédé de déshydratation de résine aqueuse dans une extrudeuse à deux vis

(30) Priorität: 19.05.1994 DE 4417559
(43) Veröffentlichungstag der Anmeldung: 22.11.1995
(73) Patentinhaber: Röhm GmbH, 64293 Darmstadt (DE)
(72) Erfinder: Vetter, Heinz, Dr. Ing., D-64380 Rossdorf (DE); Schikowsky, Hartmut, D-64283 Darmstadt (DE)

(56) Entgegenhaltungen:
- FR-A- 2 601 380
- GB-A- 1 186 770
- US-A- 4 110 843
- US-A- 4 446 094
- US-A- 5 232 649
- PATENT ABSTRACTS OF JAPAN vol. 17 no. 142 (C-1038) ,23.März 1993 & JP-A-04 311703 (ASASHI CHEM. IND. CO. LTD.) 4.November 1992,

## Beschreibung

Die Erfindung betrifft ein Verfahren zum Entwässern eines zweiphasigen flüssigen Gemisches aus einer thermoplastischen Kunststoffschmelze und einer Wasserphase in einem gegenläufigen Doppelschneckenextruder und Abziehen der wäßrigen Phase aus dem Extruder in flüssiger Form. In der Regel ist das Verfahren Bestandteil eines Verfahrens zum Entwässern eines Latex eines thermoplastischen Kunststoffes in einem gegenläufigen Doppelschneckenextruder.

In der eingesetzten Dispersion ist der Kunststoff in Form von Latexteilchen in der zusammenhängenden Wasserphase gleichmäßig verteilt. Die Primärteilchen des Latex koagulieren unter der Einwirkung von Scherkräften im Extruder bei einer Temperatur im thermoplastischen Bereich des Kunststoffs und bilden eine Schmelzephase, die mit der Wasserphase vermischt ist. In dem Schneckenextruder tritt eine Phasentrennung auf, die auf einem Druckgradienten beruht. Der Druckgradient wird durch konstruktive Merkmale des Extruders hervorgerufen, z.B. in Förderrichtung abnehmende Schneckensteigung oder abnehmende freie Querschnittsflächen durch zunehmenden Kerndurchmesser oder abnehmenden Zylinder- und Schneckendurchmesser oder durch eine hinter einem Schneckenabschnitt angeordnete Stauzone mit Knet- oder Mischelementen. Der Druckgradient verursacht eine Rückströmung, bei der die Wasserphase aufgrund ihrer niedrigeren Viskosität eine höhere Strömungsgeschwindigkeit erreicht als die Schmelzephase. Es kommt also zu einer bevorzugten Rückströmung der Wasserphase. Auf diesem Effekt beruht die Phasentrennung: die Schmelzephase sammelt sich in der Zone des höchsten Druckes, während die Wasserphase verstärkt in die Zone geringeren Druckes zurückströmt. Die Phasentrennung wird jedoch behindert, wenn sich das rückströmende Wasser als zusammenhängende Wasserphase sammelt, weil es dann durch die Wirkung der Schnecken ständig wieder in die Kunststoffschmelze eingemischt wird.

### Stand der Technik

Es ist seit langem bekannt, durch Koagulation und Entwässerung eines Kunststoff-Latex in einem Extruder eine thermoplastische Kunststoffschmelze zu gewinnen und diese gegebenenfalls gleichzeitig mit einem anderen thermoplastischen Kunststoff zu vermischen. Gemäß DE-A 20 37 784 erfolgt die Entwässerung in drei Stufen unter absteigendem Druck über die Dampfphase. Nach DE-A 22 43 696 wird die Koagulation unter einem Druck durchgeführt, bei dem das abgeschiedene Wasser flüssig bleibt. Aus dem Gemisch der Kunststoffschmelze mit der abgeschiedenen Wasserphase wird die Kunststoffschmelze unter Aufbau eines Druckgradienten strömungsabwärts gefördert und das darin befindliche Wasser ausgepreßt und zurückbefördert. Ein Teil des Gemisches aus Schmelze und Wasser dringt in eine seitlich an den Extruder angesetzte Entwässerungsleitung ein, aus der die Schmelzeanteile mittels einer Stopfschnecke in den Extruderkanal zurückbefördert werden, während die Wasserphase über ein Druckhalteventil austritt.

Die Abtrennung der Wasserphase in flüssiger Form hat vor der Verdampfung der gesamten Wasserphase den Vorteil, daß gelöste Bestandteile, wie Koagulationsmittel oder Emulgatoren, zugleich entfernt werden und daß der Energieaufwand zum Verdampfen des Wassers und zum Abpumpen großer Dampfvolumina erspart wird.

Gemäß US-A 4,136,251 wird für ein solches Verfahren ein dicht kämmender Doppelschneckenextruder verwendet. Das Gemisch aus Schmelze und Wasser wird über eine Engstelle in eine Entspannungszone des Extruders gefördert, aus der das Wasser über eine oben angesetzte Entwässerungsleitung mit Stopfschnecke bei mäßigem Druck austritt. Die zurückbleibende Schmelze wird zur vollständigen Entwässerung in eine weitere Druckzone und von dort in eine Entgasungszone gefördert. In der US-A 4,148,991 wird eine Verfahrensvariante beschrieben, bei der ein Kunststofflatex allein ohne zugesetzte Schmelze eines thermoplastischen Kunststoffes entwässert wird.

Allen beschriebenen Verfahren ist gemeinsam, daß das Gemisch aus der Kunststoffschmelze und der abgeschiedenen Wasserphase in eine Druckzone gefördert wird, die sich über mehrere Schneckengänge erstreckt und aus der das Wasser mit zunehmendem Druck stärker ausgepreßt und rückwärtgefördert wird. Die Schneckengänge sind mit diesem Schmelze-Wasser-Gemisch gefüllt, wobei der Wasseranteil in Richtung zunehmenden Druckes abnimmt. Je länger eine solche Druckzone ist, um so mehr Wasser wird ständig wieder in die Schmelzephase eingepreßt, so daß eine vollständige Entwässerung nur schwer zu erreichen ist.

Der Wasserabzug über einen Seitenkanal mit Stopfschnecke muß in einem Bereich erfolgen, wo das Wasser die zusammenhängende und die Schmelze die darin verteilte Phase bilden. Liegt der Seitenkanal zu nahe an der Eintrittsstelle des Latex, so gehen mit dem abgepreßten Wasser beträchtliche Anteile des noch unkoagulierten Latex-Kunststoffes verloren. Daher wird das Wasser an einer möglichst weit strömungsabwärts gelegenen Zone abgenommen. Die Phasenumkehrungsgrenze, wo die Schmelze-in-Wasser-Mischung in eine Wasser-in-Schmelze-Mischung übergeht, ist jedoch wegen Instabilität der Förderwirkung während des laufenden Betriebs nicht ortsfest. Zieht sie sich bis zum Ansatzpunkt des Entwässerungskanals zurück, so dringt dort verstärkt Schmelze ein, die durch die Wirkung der Stopfschnecken manchmal nicht oder schwer zurückgehalten werden kann. Der Betrieb eines Entwässerungsextruders verlangt daher laufende aufmerksame Beobachtung und muß trotz aller Sorgfalt häufig zur Behebung von Störungen unterbrochen werden.

### Aufgabe und Lösung

Der Erfindung liegt die Aufgabe zugrunde, bei einem Verfahren zum Entwässern eines zweiphasigen flüssigen Gemisches aus einer thermoplastischen Kunststoffschmelze und einer Wasserphase, insbesondere eines Latex-Koagulats, in einem gegenläufigen Doppelschneckenextruder Probleme der beschriebenen Art zu vermeiden oder zu vermindern. Durch eine gesteigerte Entwässerungsleistung soll der Mengendurchsatz erhöht und der über die Dampfphase zu entgasende Wasseranteil vermindert werden.

Ebenso wie die bekannten Entwässerungsverfahren wird das Verfahren der Erfindung unter einem Druck ausgeführt, der größer ist als der Wasserdampfdruck bei der Temperatur der Schmelze des thermoplastischen Kunststoffes. Die wäßrige Phase wird aus der Entwässerungszone des Extruders in flüssiger Form abgezogen. Die Schmelze ist in der Entwässerungszone in mehrere Abschnitte unterteilt, die jeweils in voneinander getrennten Schneckengängen gefördert werden. Erfindungsgemäß wird die Schmelzephase in wenigstens einem dieser Schneckengänge im Einzugsspalt der Doppelschnecke unter Bildung eines örtlich eng begrenzten Druckgradienten zu einem zusammenhängenden Schmelzekuchen gestaut. Dabei wird das Wasser vor der Grenze des Schmelzekuchens unter der Wirkung der Schwerkraft derart nach unten durch wenigstens eine Abzugsöffnung abfließen gelassen, daß der Schmelzekuchen nicht mit einer zusammenhängenden Wasserphase in Berührung steht.

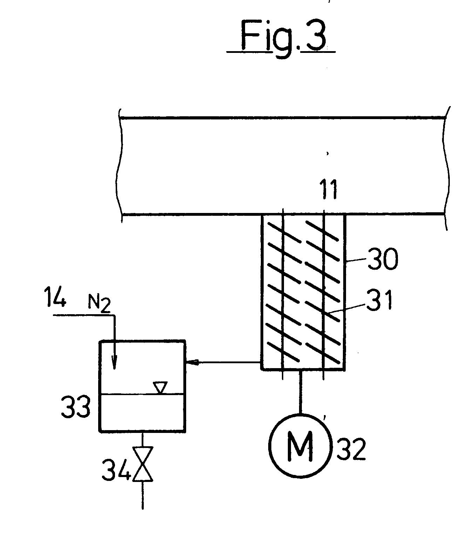

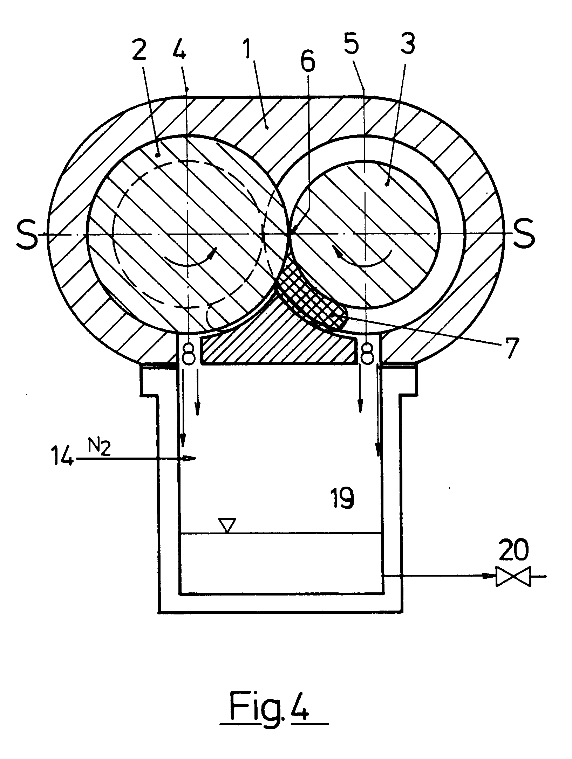

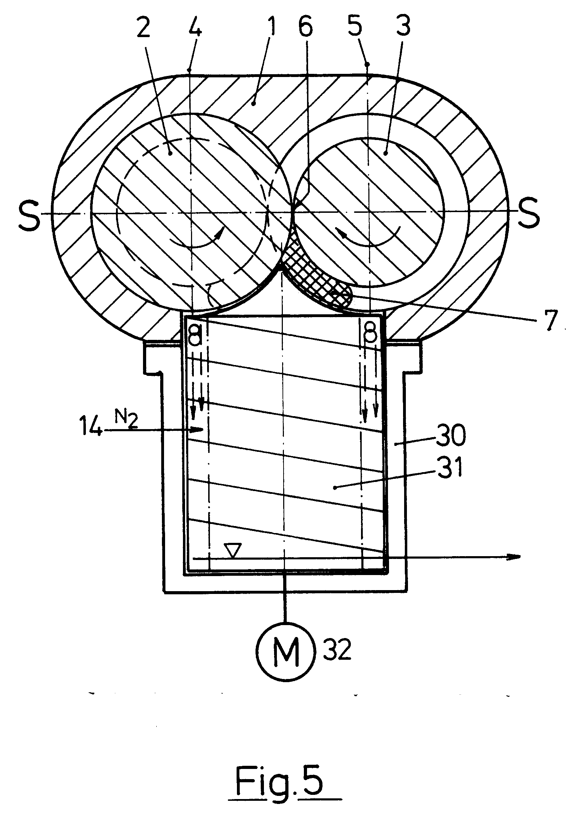

Zur Erläuterung der Wirkungsweise wird auf die Figuren 1 bis 5 verwiesen.
**Figur 1** zeigt in einem schematischen Längsschnitt die Aufteilung des Doppelschneckenextruders in verschiedene Zonen;
**Figur 2** zeigt in gleicher Darstellungsweise eine andere Anordnung mit einer Trennung des Entgasungsextruders vom Entwässerungsextruder;
**Figur 3** stellt eine bevorzugte Anordnung der Wasserabzugsvorrichtung dar;
**Figur 4** zeigt einen Querschnitt durch den Doppelschneckenextruder im Bereich des Wasserabzugs,
**Figur 5** desgleichen für die Ausführungsform gemäß Figur 3.

Im Gegensatz zu bekannten Entwässerungsverfahren wird die Schmelze nicht vor einer Widerstandszone der Schnecken aufgestaut, sondern in jedem einzelnen Schneckengang der Entwässerungszone. Dadurch ist der Druckgradient auf einen engen Raum begrenzt und wesentlich steiler als in einer herkömmlichen, über mehrere Schneckenwindungen erstreckten Druckzone. Durch die dicht kämmende Anordnung der Doppelschnecken ist der Schmelzedurchtritt im Schneckenspalt (6) vernachlässigbar, so daß sich in jedem Schneckengang in dem Zwickel vor dem Schneckenspalt ein dichter Schmelzekuchen (7) ansammelt und mit der Rotataion der Schnecken linear weiterbefördert wird. Unter der Einwirkung des örtlich eng begrenzten Druckgradienten tritt in den teilgefüllten Schneckengängen eine intensive Entwässerung ein. Wichtig ist, daß das abgepreßte Wasser unmittelbar ablaufen kann und nicht aus einer vor der Grenze des Schmelzekuchens stehenden geschlossenen Wasserphase ständig wieder eingewalkt wird. Der Schmelzekuchen steht vielmehr überwiegend mit einer Dampf- bzw. Gasphase in Berührung.

Die abgepreßte Wasserphase kann dann am besten abgeleitet werden, wenn die Schneckenachsen (4,5) in einer waagerechten Ebene S-S angeordnet sind und in der Weise gegenläufig rotieren, daß der Schmelzekuchen (7) unterhalb dieser Ebene S-S gestaut wird und das Wasser durch eine Abzugsöffnung (8) am tiefsten Punkt der Extruderwandung abfließen gelassen wird. Die Füllung der Schneckengänge muß dann so begrenzt sein, daß sich der Schmelzekuchen nicht bis zum tiefsten Punkt der Extruderwandung erstreckt, weil er sonst die dort liegende Abzugsöffnung verschließen würde. Bei umgekehrter Drehrichtung staut sich der Schmelzekuchen oberhalb der Berührungsebene. Es kann dann erforderlich sein, einen größeren Schmelzekuchen zu bilden, um den Wasserablauf in Richtung der Schwerkraft zu gewährleisten. Die Entwässerungswirkung kann in diesem Falle infolge von Rückvermischung etwas geringer sein.

Erst am Ende der Entwässerungszone wird die Schmelze, aus der nun kein Wasser mehr austritt, in einen Staubereich geführt, wo sich die Schneckengänge mit Schmelze füllen und eine Abdichtung der Entwässerungszone gegenüber dem verminderten Druck der nachfolgenden Entgasungszone gebildet wird.

### Anwendungsgebiet der Erfindung

Das Verfahren der Erfindung eignet sich zum Entwässern von Latices. Sie enthalten in der Regel 30 bis 50 Gew.-% an dispergierten Kunststoffteilchen, deren mittlere Teilchengröße z.B. 100 bis 500 nm betragen kann. Die Wasserphase macht dementsprechend 70 bis 50 Gew.-% aus; sie enthält im allgemeinen gelöste Emulgatoren, gegebenenfalls Koagulationsmittel oder andere Hilfs- und Fremdstoffe. Die Latexteilchen bestehen aus thermoplastischen Kunststoffen, die im Schmelzezustand auf einem Extruder verarbeitbar sind. Dazu gehören thermoplastische Kunststoffe mit Glasübergangstemperaturen von 50 bis 300^{o}C bzw. einem Temperaturbereich im Schmelzezustand, in welchem sie hinreichend zersetzungsbeständig sind. Die Schmelzetemperatur im Doppelschneckenextruder liegt in der Regel zwischen 100 und 250^{o}C.

Wichtige Klassen von thermoplastischen Kunststoffen sind Copolymerisate auf der Basis von Butadien, Styrol und gegebenenfalls Acrylnitril, sowie Polyvinylchlorid, Polyacrylate bzw. Polymethacrylate. Eine weitere wichtige Klasse sind Latices von mehrphasigen thermoplastischen Kunststoffen, enthaltend Latexteilchen mit einer thermoplastischen Hartphase und einer vernetzten Zähphase. Sie können gegebenenfalls während des Verfahrens mit einem weiteren thermoplastischen Kunststoff, der in fester oder geschmolzener Form in den Doppelschneckenextruder eingebracht wird und mit dem Kunststoff der Hartphase des Latex übereinstimmt oder mit diesem verträglich ist, vermischt werden. Vorzugsweise besteht der Kunststoff der Hartphase überwiegend aus Polymethylmethacrylat und der Kunststoff der Zähphase überwiegend aus vernetztem Polybutylacrylat, das zum Zwecke der Angleichung des optischen Brechungsindexes an den des Polymethylmethacrylats auch mit Styrol oder Benzylacrylat mischpolymerisiert sein kann. Typische Mischungen dieser Art enthalten z.B. 4 bis 50 Gew.-% des mehrphasigen Latex-Kunststoffes, worin der Polybutylacrylat-Anteil 2 bis 80 Gew.-% und der Polymethylmethacrylat-Anteil 20 bis 98 Gew.-% ausmachen kann, sowie 2 bis 60 Gew.-% des thermoplastischen Polymethylmethacrylat-Kunststoffes. Wenn dieser nicht in geschmolzener Form eingebracht wird, ist es auch möglich, den Latex des mehrphasigen Kunststoffes mit einem Polymethylmethacrylat-Latex zu vermischen und die Latexmischung nach dem Verfahren der Erfindung zu verarbeiten.

Aus dem Doppelschneckenextruder wird der entwässerte Kunststoff in Form einer Schmelze ausgetragen. Dies kann mit Hilfe einer Granulierdüse (9) geschehen, aus der eine Vielzahl dünner Stränge extrudiert, unter die Erweichungstemperatur gekühlt und zu einem handelsüblichen Formmassen-Granulat gebrochen wird. Man kann jedoch auch unmittelbar mit einer geeigneten Extrusionsdüse in an sich bekannter Weise ein geformtes Kunststoffprofil, z.B. eine Folie, extrudieren.

### Durchführung des Verfahrens

Der beim Verfahren der Erfindung verwendete Doppelschneckenextruder (1) enthält parallel angeordnete, kammartig ineinandergreifende Schnecken (2,3), so daß jeweils die Schneckenstege der einen Schnecke in die Schneckengänge der anderen Schnecke eingreifen. In der Mittelebene S-S, in der die beiden Schneckenachsen (4,5) liegen, laufen die beiden Schnecken auf der ganzen Länge eng nebeneinander und bilden am Schneckenspalt (6) einen Verschluß, durch den praktisch keine Schmelze hindurchtritt. Man spricht deshalb auch von "dicht kämmenden Doppelschneckenextrudern". Die Schneckengänge sind durch den Schneckenspalt (6) räumlich voneinander getrennt. Der in jedem einzelnen Schneckengang enthaltene Schmelzekuchen (7) wird zwangsweise ohne nennenswerte Vermischung mit den Schmelzemengen in benachbarten Gängen bei jeder Umdrehung um eine Schneckenwindung weiterbefördert. Der dicht kämmende Doppelschneckenextruder ist daher "fördersteif", was der Fluktuation der Phasengrenze entgegenwirkt.

Man kann in dem Extruder verschiedene Zonen nach ihrer Funktion unterscheiden; in jeder Zone ist die Schneckengeometrie der jeweiligen Funktion angepaßt. Man unterscheidet in der Regel
- eine Koagulationszone (10), wo der Latex, gegebenenfalls ein Koagulationsmittel und gegebenenfalls der zusätzliche thermoplastische Kunststoff eingeführt und koaguliert werden und wo bei einem Betriebsdruck oberhalb des Wasserdampfdruckes durch scherende Elemente, wie Knet-, Misch- und Stauzonen die Phasentrennung eingeleitet wird,
- eine Entwässerungszone (11), aus der Wasser flüssig abgenommen wird,
- eine Entgasungszone (12), die von der Entwässerungszone durch eine druckabdichtende Stauzone (15) getrennt ist,
- eine Pumpzone (13) zum erneuten Druckaufbau und zum Austragen der Schmelze.

Für Produktionszwecke kann der Doppelschneckenextruder einen Schneckendurchmesser von 55 bis 300 mm und eine Länge vom 30 bis 50-fachen des Schneckendurchmessers haben.

Man kann die Betriebsbedingungen so einstellen, daß in jedem Schneckengang die Phasengrenze P des Schmelzekuchens (7) dicht neben der Abzugsöffnung (8 bzw. 8') - in Rotationsrichtung dicht hinter dieser - liegt. Die Wasserphase kann dadurch ungehindert abgezogen werden. Zweckmäßig ist die Abzugsöffnung (8) am tiefsten Punkt unterhalb der - vorzugsweise waagerecht liegenden - Mittelebene S-S angeordnet, so daß das Wasser der Schwerkraft folgend in die Abzugsöffnung (8) einströmen kann. Der optimale Füllungsgrad der Schneckenwindungen in der Entwässerungszone läßt sich durch die Abstimmung der in Form von Latex und gegebenenfalls Kunststoffschmelze eingebrachten Kunststoffmenge mit der Förder- und Ausstoßleistung des Extruders genau einstellen.

Die Abscheidung des Kunststoffes aus dem Latex ist nicht Bestandteil des beanspruchten Verfahrens, geht diesem aber in der Regel voraus. Sie führt zunächst zu einem flüssigen Koagulat mit darin verteilten Schmelzeteilchen bzw. - tröpfchen. Unter der Scherwirkung in der Koagulationszone (10) des Extruders vereinigen sich immer mehr der ursprünglich gebildeten Schmelzetröpfchen zu stetig wachsenden, in der Wasserphase suspendierten Schmelzeagglomerationen. Durch mehrfachen Wechsel von Förder-, Knet- und Stauzonen kann dieser Prozeß beschleunigt werden. Dieses Gemisch aus einer Schmelze- und einer Wasserphase bildet den Ausgangspunkt des Verfahrens der Erfindung.

Das Entwässerungsverfahren eignet sich zum Dauerbetrieb unter gleichbleibenden Bedingungen. Der Latex oder ein daraus hergestelltes, förderbares flüssiges Vorkoagulat wird mittels einer geeigneten Dosiervorrichtung (16), z.B. einer Membranpumpe, an einer oder mehreren Stellen in den Extruder (1) eingebracht. Wird der Latex oder das Vorkoagulat allein verarbeitet, so kann er bzw. es am hinteren Ende eingeführt werden. Wird dagegen eine Mischung mit einem weiteren thermoplastischen Kunststoff erzeugt, so kann dieser über eine Dosiervorrichtung (17) aus einem Vorratsbehälter (18) als Granulat eingezogen, aufgeschmolzen und plastifiziert werden. Vorzugsweise wird der Kunststoff schon als Schmelze eingepreßt. In der Entwässerungszone (11) vermischt sich der aus dem Latex bzw. dem Vorkoagulat abgeschiedene Kunststoff mit der schon vorhandenen Schmelze.

Die Phasentrennung wird bei einem ausreichend hohen Druck durchgeführt, so daß die Wasserphase auch beim niedrigsten Druck im Bereich des Druckgradienten nicht verdampft. Bei Schmelzetemperaturen von 100 bis 240^{o}C ist in der Entwässerungszone ein Druck von 10 bis 40 bar erforderlich. Der Betriebsdruck kann gegebenenfalls durch aufgepreßtes Inertgas eingestellt werden; beispielsweise kann über eine Leitung (14) Stickstoff mit einem Druck oberhalb des Dampfdruckes der Wasserphase eingepreßt werden.

In der Entwässerungszone (11) wird die abgeschiedene Wasserphase unter Aufrechthaltung des Druckes über wenigstens eine Abzugsöffnung (8) in der Extruderwandung in ein Entwässerungsgefäß (19) zu einem Entspannungsventil (20) geleitet. Vor dem Eintritt in die Entwässerungszone kann die Schmelze durch Einpressen von kaltem Wasser abgekühlt und dadurch ihre Viskosität erhöht werden. Damit wird die Neigung der Schmelze vermindert, zusammen mit dem Wasser in die Abzugsöffnung einzuströmen. Vorzugsweise liegt die Abzugsöffnung (8) in der unteren Wandung, so daß die abgeschiedene wäßrige Phase unter der Wirkung der Schwerkraft aus dem Doppelschneckenextruder austritt.

Auf dem Wege zum Entspannungsventil (20) kann die Wasserphase abgekühlt werden, damit sie beim Entspannen nicht siedet. Als Abzugsöffnung (8) eignet sich ein parallel zur Schneckenachse verlaufender Schlitz mit einer Breite von etwa 0,01 bis 0,1 D und einer Länge von 1 bis 3 D (= Schneckendurchmesser). Man kann auch in der unteren Wandung des Doppelschneckenextruders einen zylindrischen Abzugskanal (30) mit einer Rückhalteschnecke (31) verwenden, die mittels des Antriebs (32) gegebenenfalls bei einer Betriebsstörung eindringende Schmelze in den Doppelschneckenkanal zurückfördert. Am äußeren Ende der Rückhalteschnecke befindet sich ein unter Druck gehaltener Sammeltopf (33), aus dem die abgetrennte Wasserphase über ein Druckhalteventil (34) austritt. Zweckmäßig wird die Druckleitung (14) für das Inertgas an den Sammeltopf (33) angeschlossen.

Nach dem Abzug der Wasserphase enthält die Kunststoffschmelze meistens noch 5 bis 20 Gew.-% Wasser in gelöster oder flüssig eingeschlossener Form. Die Abtrennung von wasserlöslichen Nebenbestandteilen, wie Emulgatoren oder Elektrolyte, aus der Schmelze läßt sich vervollständigen, wenn der entwässerten Schmelze in einer zusätzlichen Mischzone reines Wasser oder ein anderes flüchtiges Lösemittel, das die Verunreinigungen, jedoch nicht den Kunststoff löst, zugesetzt und in einer weiteren Entwässerungszone in gleicher Weise wie zuvor abgetrennt wird. Das restliche Wasser bzw. Lösemittel wird in der anschließenden Entgasungszone (12) bei Normaldruck und/oder einem Druck von 0,01 bis 0,99 bar weitgehend verdampft, gegebenenfalls in mehreren Stufen bei absteigenden Drücken. Es wird ein Wassergehalt unter 0,1 Gew.-%, vorzugsweise von 0,03 bis 0,06 Gew.-% angestrebt. Nach der Entgasung wird die Schmelze in der abschließenden Pumpzone (13) auf einen zur Extrusion geeigneten Schmelzedruck gebracht und extrudiert.

Während der Phasentrennung kann die erforderliche Größe und Gleichmäßigkeit des Druckes sicher aufrechterhalten werden, wenn die Entwässerungszone (11) von der Entgasungszone (12) apparativ getrennt wird. Die Funktionen der Phasentrennung und der Entgasung werden in diesem Falle auf zwei Extruder verteilt, wobei nur für die erste Funktion ein kämmender Doppelschneckenextruder erforderlich ist. Der Druck am Ende der Entwässerungszone (11), der eine Pumpzone (21) nachgeschaltet werden kann, läßt sich mittels eines Drosselventils (22) für die ausgetragene Schmelze genau einstellen. Die Schmelze wird über eine Leitung (23) in einen herkömmlichen Entgasungsextruder eingeführt. Dort können gewünschtenfalls nach der Entgasungszone (12) in einer oder mehreren Mischzonen (25) nochmals eine Kunststoffschmelze sowie gegebenenfalls andere Additive, wie Gleitmittel, Stabilisatoren, Antistatika, Färbemittel, UV-Absorber u.dergl. zugeführt werden; anschließend können in einer weiteren Entgasungszone (26) unter Vakuum letzte flüchtige Anteile aus der Schmelze entfernt werden. Am Ende des Entgasungsextruders wird die Schmelze mittels einer Pumpzone (27) ausgetragen.

### Beispiel: Entwässerung eines Polyacrylat-Latex

Es wird ein dreistufig aufgebautes Emulsionspolymerisat mit folgender Zusammensetzung verarbeitet: (In Klammern Massenverhältnisse der mit Kurzbezeichnungen angegebenen Monomerbestandteile)
Stufe I MMA/EA/ALMA (95,7/4/0,3)
Stufe II BA/S/ALMA (82/17/1)
Stufe III MMA/EA (96/4)
Massenverhältnis I/II/III 20/45/35
Massenverhältnis Polymerphase/Wasserphase 45/55

Der Latex wird mit einer Membrandosierpumpe (16) mit einem Massestrom von 10 kg/h in den Zylinder eines dicht kämmenden, gegenläufigen Doppelschneckenextruders (1) gepumpt. Die Schneckenachsen (4,5) liegen in einer waagerechten Ebene S-S; die Drehrichtung verläuft unterhalb der Ebene S-S zum Schneckenspalt (6). Die Schneckendurchmesser betragen 34 mm. Die Schnecken (2,3) sind dreigängig mit einer Steigung von 30 mm.

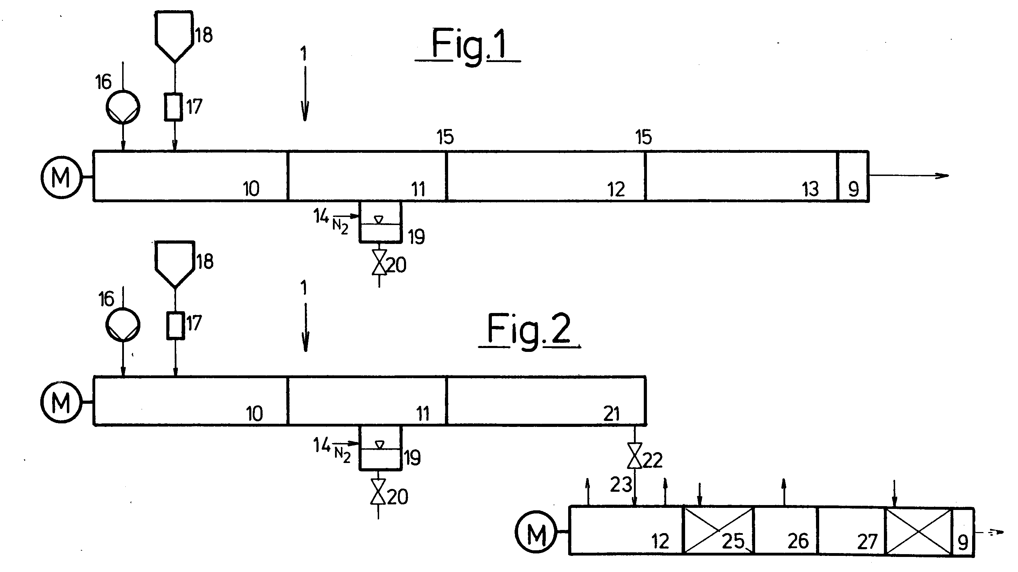

Die Koagulationszone (10, Fig.2) hat eine Länge von 600 mm und wird auf 230^{o}C gehalten; die Entwässerungszone (11) hat eine Länge von 120 mm und wird mit einer Zylindertemperatur von 210^{o}C betrieben. Die Schneckendrehzahl wird auf 80 U/min eingestellt, sodaß die Phasengrenzfläche zwischen Schmelzekuchen (7) und Wasserphase in einem Winkel W = 45^{o} unterhalb der Mittelebene, gemessen vom Schneckenspalt aus, zu liegen kommt.

In der Entwässerungszone sind die beiden Zylinder am tiefsten Punkt mit 2 mm breiten und 60 mm langen Schlitzen geöffnet. Unter diesen beiden Öffnungen ist der Sammelbehälter (19) druckdicht montiert.

Der Sammelbehälter (19) für das abgeschiedene Wasser wird über die Leitung (14) unter einem Stickstoffdruck von 40 bar gehalten. Über eine Flüssigkeitsniveausteuerung wird über das Ventil (20) eine Wassermenge von 5,27 kg/h abgezogen. Das Wasser enthält 0,4 Gew.-% organische Substanz. Über das Ventil (22) wird der Zustrom zum nachgeschalteten Entgasungsextruder so geregelt, daß vor dem Ventil ein Schmelzedruck von 80 bar konstant eingehalten wird. Der Zustrom in den Entgasungsextruder enthält 8 Gew.-% Wasser.

Im Entgasungsextruder (Schneckendurchmeser 34 mm) werden die Restmengen an flüchtigen Anteilen durch eine Vorwärts- und eine Rückwärts-Entgasungszone abgetrennt. Der Druck in der Rückwärtsentgasung beträgt 600 mbar, in der nachfolgenden Vorwärtsentgasung 30 mbar. Das an der Granulierdüse (9) abgenommene Extrudat bzw. Granulat hat eine Restfeuchte von 0,06 Gew.-%. Es wird als Schlagzäh-Modifizierungsmittel für PMMA-Formmassen verwendet.

## Patentansprüche

1. Verfahren zum Entwässern eines zweiphasigen flüssigen Gemisches aus einer thermoplastischen Kunststoffschmelze und einer Wasserphase, insbesondere eines Latex-Koagulats, in einem gegenläufigen Doppelschneckenextruder (1) unter einem Druck, der größer ist als der Wasserdampfdruck bei der Temperatur der Schmelze des thermoplastischen Kunststoffes, und Abziehen der wäßrigen Phase aus der Entwässerungszone des Extruders (1) in flüssiger Form,
dadurch gekennzeichnet,
daß die Schmelze in der Entwässerungszone in teilgefüllten Schneckengängen gefördert und in wenigstens einem dieser Schneckengänge im Einzugsspalt der Doppelschnecke unter Bildung eines örtlich eng begrenzten, steilen Druckgradienten zu einem zusammenhängenden Schmelzekuchen (7) gestaut wird und daß das Wasser vor der Grenze des Schmelzekuchens (7) unter der Wirkung der Schwerkraft derart nach unten durch wenigstens eine Abzugsöffnung abfließen gelassen wird, daß der Schmelzekuchen (7) nicht mit einer zusammenhängenden Wasserphase in Berührung steht.

2. Verfahren nach Anspruch 1, dadurch gekennzeichnet, daß die Schneckenachsen (4,5) in einer waagerechten Ebene S-S angeordnet sind und in der Weise gegenläufig rotieren, daß der Schmelzekuchen (7) unterhalb dieser Ebene gestaut wird und das Wasser durch eine Abzugsöffnung (8) am tiefsten Punkt der Extruderwandung abfließen gelassen wird.

3. Verfahren nach Anspruch 2, dadurch gekennzeichnet, daß das abfließende Wasser unter Druck in ein Sammelgefäß (19,33) fließt, worin das Flüssigkeitsniveau unterhalb der inneren Extruderwandung gehalten wird.

4. Verfahren nach einem oder mehreren der Ansprüche 1 bis 3, dadurch gekennzeichnet, daß das zu entwässernde Gemisch wenigstens zum Teil durch Koagulation eines Latex eines thermoplastischen Kunststoffes in einer der Entwässerungszone (11) vorausgehenden Koagulationszone (10) des Doppelschneckenextruders gebildet wird.

5. Verfahren nach einem oder mehreren der Ansprüche 1 bis 4, dadurch gekennzeichnet, daß das zu entwässernde Gemisch wenigstens zum Teil durch Einleiten einer Schmelze eines thermoplastischen Kunststoffes in eine der Entwässerungszone vorausgehende Mischzone des Doppelschneckenextruders gebildet wird.

6. Verfahren nach Anspruch 4 oder 5, dadurch gekennzeichnet, daß der Zustrom des zu koagulierenden Latex und/oder der Schmelze des thermoplastischen Kunststoffes und die Förderleistung des Doppelschneckenextruders in der Weise aufeinander abgestimmt werden, daß in den Schneckengängen der Entwässerungszone die Grenzlinie zwischen dem Schmelzekuchen so verläuft, daß dieser die Abzugsöffnungen in der Extruderwand nicht überdeckt.

7. Verfahren nach einem oder mehreren der Ansprüche 1 bis 6, dadurch gekennzeichnet, daß in die Entwässerungszone ein Inertgas eingepreßt wird.

8. Verfahren nach einem oder mehreren der Ansprüche 1 bis 7, dadurch gekennzeichnet, daß die Schmelze des thermoplastischen Kunststoffes nach dem Abziehen der flüssigen Wasserphase zur Entfernung des restlichen Wassers einer Vakuumentgasung unterworfen wird.

## Claims

1. A process for dewatering a two-phase fluid mixture of a thermoplastic melt and an aqueous phase, especially a latex coagulate, in a contra-rotating double screw extruder (1) under a pressure which is greater than the water steam pressure at the temperature of the thermoplastic melt, and extraction of the aqueous phase from the dewatering zone of the extruder (1) in fluid form,
characterised in that the melt in the dewatering zone is conveyed into partially-filled spiral passages and is stored as a cohesive melt cake (7) in at least one of these spiral passages in the feed slot of the double screw, forming a locationally tightly-limited steep pressure gradient, and that the water is allowed to flow off downwards through at least one discharge opening under the effects of gravity before the limit of the melt cake (7) in such a way that the melt cake (7) does not come into contact with a cohesive water phase.

2. A process according to claim 1, characterised in that the screw axes (4,5) are arranged in a horizontal plane S - S and rotate in a contra-rotating manner in such a way that the melt cake (7) is stored beneath this plane and that the water is allowed to flow off through a discharge opening (8) at the deepest point of the extruder wall.

3. A process according to claim 2, characterised in that the discharged water flows under pressure into a collecting vessel (19,33), wherein the fluid level is kept below the inner extruder wall.

4. A process according to one or more of claims 1 to 3, characterised in that the mixture which is to be dewatered is formed, at least partly, by coagulation of a latex of a thermoplastic in a coagulation zone (10) of the double screw extruder preceding the dewatering zone (11).

5. A process according to one or more of claims 1 to 4, characterised in that the mixture which is to be dewatered is formed, at least partly, by the introduction of a melt of a thermoplastic into a mixing zone of the double screw extruder preceding the dewatering zone.

6. A process according to claim 4 or 5, characterised in that the influx of the latex which is to be coagulated and/or the melt of the thermoplastic and the conveying performance of the double screw extruder are coordinated in such a way that in the spiral passages of the dewatering zone, the boundary line between (sic.) the melt cake runs so that this does not cover the discharge openings in the extruder wall.

7. A process according to one or more of claims 1 to 6, characterised in that an inert gas is forced into the dewatering zone.

8. A process according to one or more of claims 1 to 7, characterised in that after removal of the fluid water phase, the melt of the thermoplastic is subjected to vacuum degassing in order to remove the residual water.

## Revendications

1. Procédé de déshydratation d'un mélange liquide à deux phases formé d'une matière synthétique fondue thermoplastique et d'une phase aqueuse, notamment d'un latex coagulé, ayant dans une extrudeuse à double vis (1) tournant en sens opposé, sous une pression supérieure à la pression de la vapeur d'eau à la température du produit en fusion de la matière synthétique thermoplastique et en évacuant la phase aqueuse de la zone de déshydratation de l'extrudeuse (1), à l'état liquide,
caractérisé en ce que
le produit en fusion est transféré dans la zone de déshydratation dans des filets de vis remplis en partie et le produit en fusion est accumulé dans au moins l'un des filets de vis, dans l'intervalle d'introduction de la double vis en formant un gradient de pression prononcé, localement très limité pour former un gâteau cohérent (7) de produit en fusion et,
on laisse s'écouler l'eau avant la limite du gâteau de produit en fusion (7) sous l'effet du poids à travers au moins un orifice d'évacuation, pour que le gâteau (7) du produit en fusion n'arrive pas en contact avec une phase aqueuse cohérente.

2. Procédé selon la revendication 1,
caractérisé en ce que
les axes (4, 5) des vis sont situés dans un plan horizontal S-S et tournent en sens opposé pour que le gâteau de fusion (7) s'accumule en dessous de ce plan et que l'eau puisse être évacuée en coulant par un orifice d'extraction (8) au point le plus bas de la paroi d'extrusion.

3. Procédé selon la revendication 2,
caractérisé en ce que
l'eau qui s'écoule arrive sous pression dans un récipient collecteur (19, 33) dans lequel, on maintient le niveau de liquide en dessous de la paroi d'extrusion intérieure.

4. Procédé selon une ou plusieurs des revendications 1 à 3,
caractérisé en ce que
le mélange à déshydraté est formé au moins en partie par la coagulation d'un latex d'une matière synthétique thermoplastique dans une zone de coagulation (10) en amont de la zone de déshydratation (11) de l'extrudeuse à double vis.

5. Procédé selon une ou plusieurs des revendications 1 à 4,
caractérisé en ce que
le mélange à déshydrater est formé au moins en partie par l'introduction d'un produit en fusion d'une matière synthétique thermoplastique dans une zone de mélange en amont de la zone de déshydratation de l'extrudeuse à double vis.

6. Procédé selon une ou plusieurs des revendications 4 ou 5,
caractérisé en ce que
l'arrivée de latex à coaguler et/ou du produit en fusion de la matière synthétique thermoplastique et le débit de l'extrudeuse à double vis, sont accordés l'un par rapport à l'autre pour que dans les filets de vis de la zone d'évacuation d'eau, la limite entre le gâteau de produit en fusion soit telle que celui-ci ne recouvre pas les orifices d'extraction de la paroi de l'extrudeuse.

7. Procédé selon une ou plusieurs des revendications 1 à 6,
caractérisé en ce que
du gaz inerte est fourni sous pression à la zone d'évacuation d'eau.

8. Procédé selon une ou plusieurs des revendications 1 à 7,
caractérisé en ce que
le produit en fusion de la matière thermoplastique après extraction de la phase aqueuse liquide, est soumis à un dégazage sous vide pour évacuer l'eau résiduelle.
